(19) Europäisches Patentamt
European Patent Office
Office européen des brevets

(11) **EP 3 255 457 B1**

(12) **EUROPEAN PATENT SPECIFICATION**

(45) Date of publication and mention of the grant of the patent:
**20.10.2021 Bulletin 2021/42**

(21) Application number: **17175049.0**

(22) Date of filing: **08.06.2017**

(51) Int Cl.:
**G01S 17/10** *(2020.01)*  **G01S 17/42** *(2006.01)*
**G01S 7/48** *(2006.01)*

(54) **DISTANCE-MEASUREMENT DEVICE**

ABSTANDSMESSVORRICHTUNG

DISPOSITIF DE MESURE DES DISTANCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2016 JP 2016114606**

(43) Date of publication of application:
**13.12.2017 Bulletin 2017/50**

(73) Proprietor: **AISIN SEIKI KABUSHIKI KAISHA**
**Kariya-shi, Aichi-ken 448-8650 (JP)**

(72) Inventors:
• **ANDO, Mitsuhiro**
**Kariya-shi, Aichi-ken 448-8650 (JP)**
• **KOBAYASHI, Toshihiro**
**Kariya-shi, Aichi-ken 448-8650 (JP)**
• **NAGAMINE, Noboru**
**Kariya-shi, Aichi-ken 448-8650 (JP)**
• **OCHIAI, Hirotoshi**
**Kariya-shi, Aichi-ken 448-8650 (JP)**

(74) Representative: **Cabinet Beau de Loménie**
**158, rue de l'Université**
**75340 Paris Cedex 07 (FR)**

(56) References cited:
**EP-A1- 1 494 044  EP-A1- 2 600 173**
**US-A1- 2015 346 326**

**Description**

TECHNICAL FIELD

This disclosure relates to a distance-measurement device.

BACKGROUND DISCUSSION

There is known a distance-measurement device that irradiates distance-measurement light such as a laser and measures a distance to a distance measurement position based on a time difference between an emitting timing and a receiving timing of the distance-measurement light. Further, there is known a distance-measurement device that measures distances to positions on a plurality of distance-measurement directions by irradiating distance-measurement light in a plurality of distance-measurement directions. Related technologies are disclosed in, for example, JP 2013-210315 A (Reference 1).

However, the distance-measurement devices have a problem that, since distances on non-distance-measurement directions among the plurality of distance-measurement directions may not be measured, resolution may not be improved. US 2015/0346326 is also known and describes methods and systems for vehicle classification from laser scans using global alignment.

SUMMARY

The invention is defined by independent claim 1. A distance-measurement device according to an aspect of this invention includes: a light emitting unit that emits distance-measurement light in a plurality of distance-measurement directions; a light receiving unit that transmits received-light information upon receiving the distance-measurement light reflected by a distance-measurement target; a calculating unit that transmits a light emission instruction to the light emitting unit and receives the received-light information from the light receiving unit to calculate a measurement distance which is a distance to the distance-measurement target based on a time difference between the light emission and the light reception; and a complementing unit that complements a non-measurement distance of a non-distance-measurement direction among the plurality of distance-measurement directions using measurement distances of adjacent distance-measurement directions on either side of the non-distance-measurement direction. The complementing unit complements the non-measurement distance based on a complementing process that is determined according to a distance difference which is a difference between the measurement distances of the adjacent distance-measurement directions on either side of the non-distance-measurement direction.

With this configuration, since the distance-measurement device can complement the non-measurement distance of the non-distance-measurement direction among the distance-measurement directions based on the measurement distances of both the adjacent distance-measurement directions, the resolution can be improved. Since the distance-measurement device determines the complementing process based on the distance difference between the measurement distances of the adjacent distance-measurement directions on either side of the non-distance-measurement direction, the non-measurement distance can be more appropriately complemented.

In the distance-measurement device, the complementing unit may determine the complementing process according to a shorter measurement distance between the measurement distances of the adjacent distance-measurement directions on either side of the non-distance-measurement direction, and the distance difference. With this configuration, the distance-measurement device can complement the non-measurement distance more appropriately corresponding to not only the distance difference, but also the shorter measurement distance.

In the distance-measurement device, the light emitting unit may emit the distance-measurement light in the plurality of distance-measurement directions arranged in a radial manner. With this configuration, the distance-measurement device can scan the distance-measurement light without substantially moving the light emitting unit so that downsizing of the distance-measurement device can be implemented.

In the distance-measurement device, when the distance difference is in a first preset range, the complementing unit calculates the non-measurement distance by a first complementing process, and when the distance difference is in a second range larger than the first range, the complementing unit calculates the non-measurement distance by a second complementing process in which the weight ratio of the weight of the shorter measurement distance to the weight of the longer measurement distance between the measurement distances of the adjacent distance-measurement directions on either side of the non-distance-measurement direction is larger than a weight ratio in the first complementing process. With this configuration, when the distance difference becomes large to be in the second range in which resolution of a measurement distance largely varies, the distance-measurement device increases the weight of the shorter measurement distance of which the resolution is high so that the non-measurement distance can be calculated with high accuracy.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a view illustrating a distance-measurement device of a first embodiment of the invention;
Fig. 2 is a view for explaining a method of calculating a measurement distance of a distance-measurement direction by a calculating unit;
Fig. 3 is a perspective view for explaining calculation of measurement distances to distance-measurement targets on distance-measurement directions by the calculating unit;
Fig. 4 is a view for explaining storage of measurement distances in a memory unit by the calculating unit;
Fig. 5 is a view for explaining dependency of resolution on measurement distances;
Fig. 6 is a view for explaining complementation of non-measurement distances of non-distance-measurement directions by a complementing unit;
Fig. 7 is a view for explaining storage of the non-measurement distances of the non-distance-measurement directions in the memory unit by the complementing unit;
Fig. 8 is a flowchart of a distance measuring process that is executed by a controller;
Fig. 9 is a flowchart of a complementing operation process that is executed by the complementing unit;
Fig. 10 is a view for explaining a scanning range of a distance-measurement device of a second embodiment not forming part of the invention; and
Fig. 11 is a view for explaining another scanning range of the distance-measurement device of the second embodiment.

DETAILED DESCRIPTION

Embodiments and modifications described below include similar components. Thus, hereinafter, the similar components will be denoted by their common reference numerals, and overlapping descriptions will be partially omitted. Parts included in the embodiments and the modifications may be configured to be replaced with corresponding parts in other embodiments and modifications. Further, configurations, positions and others of the parts included in the embodiments and the modifications are the same as those in other embodiments and modifications unless otherwise specified.

<First embodiment of the invention>

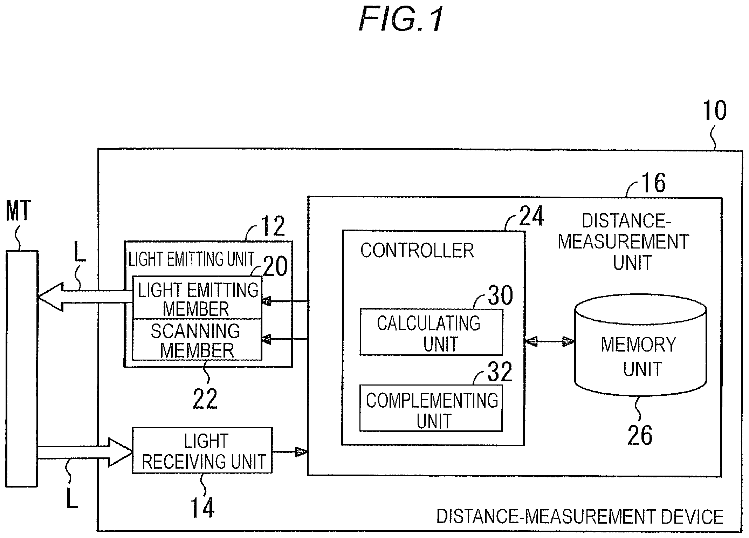

Fig. 1 is a view illustrating a distance-measurement device 10 of a first embodiment of the invention. The distance-measurement device 10 measures one or a plurality of measurement distances which are distances to one or a plurality of distance-measurement targets MT. The distance-measurement device 10 is mounted in a moving body such as an automobile and generates a three-dimensional distance-measurement image based on one or a plurality of measurement distances. As illustrated in Fig. 1, the distance-measurement device 10 includes a light emitting unit 12, a light receiving unit 14, and a distance-measurement unit 16.

The light emitting unit 12 emits distance-measurement light L in a plurality of distance-measurement directions arranged in a radial manner. The light emitting unit 12 includes a light emitting member 20 and a scanning member 22.

The light emitting member 20 is, for example, a laser device such as a semiconductor laser. The light emitting member 20 outputs the distance-measurement light L. The light emitting member 20 outputs the distance-measurement light L at a predetermined time interval.

The scanning member 22 causes the distance-measurement light L to scan. The scanning member 22 is, for example, a rotation driving device that outputs a rotation driving force, such as a motor. The scanning member 22 rotates the light emitting member 20 around the rotation center along, for example, the vertical direction so as to cause the distance-measurement light L to scan along the horizontal direction. Accordingly, the scanning member 22 causes the distance-measurement light L to scan in a plurality of radially extending discrete distance-measurement directions. For example, the scanning member 22 causes the distance-measurement light L to scan by reciprocating the distance-measurement light L within an angle of a predetermined scanning range. Alternatively, the scanning member 22 may cause the distance-measurement light L to scan by rotating the distance-measurement light L in a scanning range of 360°. Further, the scanning member 22 may have a motor and a reflecting member such as a mirror. In this case, the scanning member 22 causes the distance-measurement light L to scan by shaking the reflecting member that reflects the distance-measurement light L by a rotation driving member.

The light receiving unit 14 receives the distance-measurement light L reflected by a distance-measurement target MT. Upon receiving the distance-measurement light L, the light receiving unit 14 transmits received-light information as an electric signal to the distance-measurement unit 16. The light receiving unit 14 is, for example, a device that converts an optical signal into an electric signal, such as a photodiode or a phototransistor.

The distance-measurement unit 16 is connected to the light emitting unit 20 and the scanning member 22 of the light emitting unit 12, and the light receiving unit 14 so as to transmit/receive an electric signal therewith. For example, the distance-measurement unit 16 calculates one or a plurality of measurement distances to one or a plurality of distance-measurement targets MT and generates a three-dimensional distance-measurement image of the distance-measurement targets MT based on the measurement distances. An example of the distance-measurement unit 16 is a computer. The distance-measurement unit 16 includes a controller 24 and a memory unit 26.

The controller 24 is an arithmetic process device such as a processor including a central processing unit (CPU). The controller 24 includes a calculating unit 30 and a complementing unit 32. The controller 24 functions as the calculating unit 30 and the complementing unit 32 by, for example, reading programs stored in the memory unit 26.

The calculating unit 30 controls the light emitting member 20 and the scanning member 22 of the light emitting unit 12. Specifically, the calculating unit 30 transmits a light emission instruction to the light emitting member 20 of the light emitting unit 12 to cause the distance-measurement light L to be emitted. For example, the calculating unit 30 transmits the light emission instruction at a regular time interval so as to cause the distance-measurement light L to be emitted at a regular time interval. The calculating unit 30 controls the rotation speed of the scanning member 22 to control the rotation speed of the distance-measurement light L around the light emitting unit 12. Accordingly, the calculating unit 30 transmits a scanning instruction to the scanning member 22 to cause the distance-measurement light L to scan in the plurality of distance-measurement directions. The calculating unit 30 receives the received-light information from the light receiving unit 14 that has received the distance-measurement light L. Upon acquiring the received-light information from the light receiving unit 14, the calculating unit 30 calculates measurement distances to the distance-measurement targets MT on the plurality of distance-measurement directions (strictly speaking, to positions on the distance-measurement targets MT which the distance-measurement light L reaches), based on a time difference between the light emission of the light emitting member 20 and the light reception of the light receiving unit 14. The calculating unit 30 stores the measurement distances in the memory unit 26. For example, the calculating unit 30 stores the measurement distances in a one-dimensional memory array in the memory unit 26.

The calculating unit 30 may calculate a reflection intensity that indicates an intensity of the reflection of the distance-measurement light L by the surfaces of the distance-measurement targets MT, from the magnitude of the received-light information. The calculating unit 30 may store the reflection intensity in a one-dimensional memory array in the memory unit 26, in addition to the measurement distances.

The complementing unit 32 complements non-measurement distances of non-distance-measurement directions among the plurality of distance-measurement directions, using measurement distances of adjacent distance-measurement directions on either side of a non-distance-measurement direction, between the measurement distances stored in the memory unit 26. A non-distance-measurement direction indicates a direction between a distance-measurement direction and its adjacent distance-measurement direction. That is, the non-distance-measurement direction is a direction in which the light emitting unit 12 is not outputting the distance-measurement light L. The complementing unit 32 complements the non-measurement distances based on a complementing process that is determined according to a distance difference which is a difference between the measurement distances of the adjacent distance-measurement directions on either side of the non-distance-measurement direction. In the embodiment of the invention, the complementing unit 32 complements the non-measurement distances based on a complementing process that is first or second preset complementing processes to be determined according to a distance difference. Specifically, when the distance difference is in a first predetermined range, the complementing unit 32 calculates the non-measurement distances by a first complementing process. When the distance difference is in a second range, the complementing unit 32 calculates the non-measurement distances by a second complementing process in which, between the measurement distances of the adjacent distance-measurement directions, a weight ratio of the weight of the shorter measurement distance to the weight of the longer measurement distance is larger than a weight ratio in the first complementing process. Here, the second range is larger than the first range. For example, the first range is less than a predetermined distance threshold Th, and the second range is equal to or more than the distance threshold Th. The distance threshold Th may be a predetermined value (e.g., 10 % of a measurable distance) or a value that varies depending on a measurement distance (e.g., a value which is the same as the shorter measurement distance). The complementing unit 32 stores the non-measurement distances in the memory unit 26. For example, the complementing unit 32 stores a non-measurement distance in a memory area between memory areas of the measurement distances of the adjacent distance-measurement directions that are used for the calculation of the non-measurement distance, in the memory areas of the memory unit 26. Accordingly, the calculating unit 30 and the complementing unit 32 store the measurement distances and the non-measurement distances in a one-dimensional memory array in which a measurement distance and a non-measurement distance are alternately arranged, in the memory unit 26.

The complementing unit 32 may calculate reflection intensities of the non-distance-measurement directions based on reflection intensities of the adjacent distance-measurement directions on either side of the non-distance-measurement direction. The complementing unit 32 may store the reflection intensities of the non-distance-measurement directions in a one-dimensional memory array in the memory unit 16, in addition to the non-measurement distances.

The memory unit 26 is a memory device including a read only memory (ROM), a random access memory (RAM), a hard disk drive (HDD), a solid state drive (SSD), and others. The memory unit 26 stores, for example, programs for the distance measuring process executed by the controller 24 and others, and parameters necessary to execute the programs. The memory unit 26 stores, for example, the first and second complementing processes that are used for the distance measuring process.

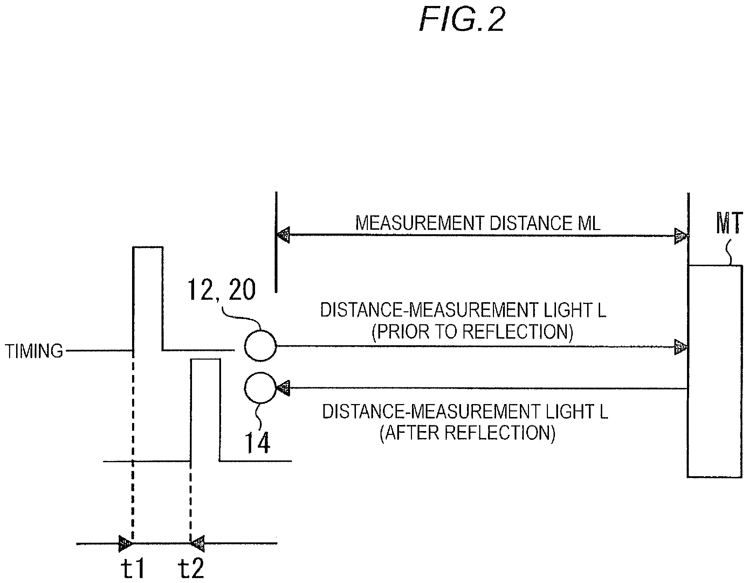

Fig. 2 is a view for explaining a method of calculating a measurement distance ML of a distance-measurement direction by the calculating unit 30. The calculating unit 30 calculates the measurement distance ML by a time of flight (TOF) method. For example, as illustrated in Fig. 2, the calculating unit 30 transmits a light emission instruction to the light emitting member 20 to instruct output of the distance-measurement light L, and calculates a light emission timing $t1$ based on the transmission timing. The calculating unit 30 calculates a light reception timing $t2$ based on a timing of acquiring received-light information from the light receiving unit 14. The calculating unit 30 calculates the measurement distance ML to the distance-measurement target MT from a time difference between the light emission timing $t1$ and the light reception timing $t2$ based on the following equation (1). In equation (1), C is the speed of light.

$$ML = C \times (t2-t1)/2 \ ... \ (1)$$

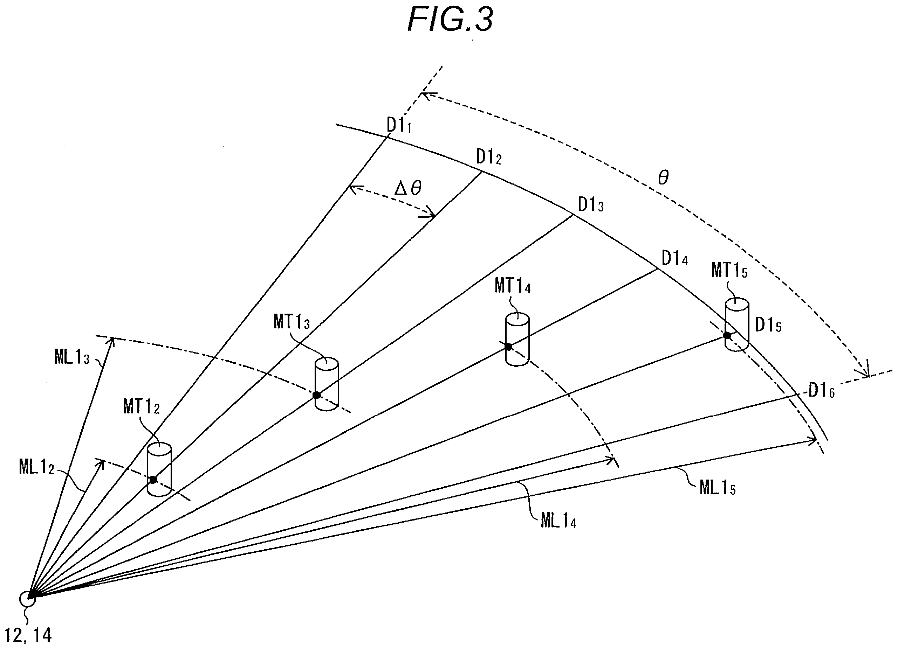

Fig. 3 is a perspective view for explaining calculation of measurement distances ML1 to distance-measurement targets MT on distance-measurement directions $D1_n$ by the calculating unit 30. As illustrated in Fig. 3, the light emitting member 20 emits the distance-measurement light L in a plurality of distance-measurement directions $D1_n$ ($n=1, 2, ...$) that extend radially within a scanning range $\theta$. Here, when the light emitting member 20 outputs the distance-measurement light L at a predetermined time interval, and the distance-measurement light L scans around the light emitting unit 12 at a constant rotation speed, an angular interval $\Delta\theta$ between adjacent distance-measurement directions $D1_n$ becomes constant. As illustrated in Fig. 3, when a distance-measurement target $MT1_2$ exists on a distance-measurement direction $D1_2$, the calculating unit 30 calculates a measurement distance $ML1_2$ to the distance-measurement target $MT1_2$ on the distance-measurement direction $D1_2$, by substituting the light emission timing $t1$ and the light reception timing $t2$ of the distance-measurement light L output to the distance-measurement direction $D1_2$, into equation (1). Further, the calculating unit 30 calculates a reflection intensity $R1_2$ from the magnitude of the received-light information acquired from the light receiving unit 14. Similarly, the calculating unit 30 calculates measurement distances $ML1_3$, $ML1_4$, and $ML1_5$ to distance-measurement targets $MT1_3$, $MT1_4$, and $MT1_5$ existing on distance-measurement directions $D1_3$, $D1_4$, and $D1_5$, and calculates reflection intensities $R1_3$, $R1_4$, and $R1_5$. Meanwhile, for the distance-measurement directions $D1_n$ on which no distance-measurement target MT exist (e.g., distance-measurement directions $D1_1$ and $D1_6$), and therefore does not acquire received-light information, and therefore does not calculate measurement distances $ML1_n$ and reflection intensities $R1_n$.

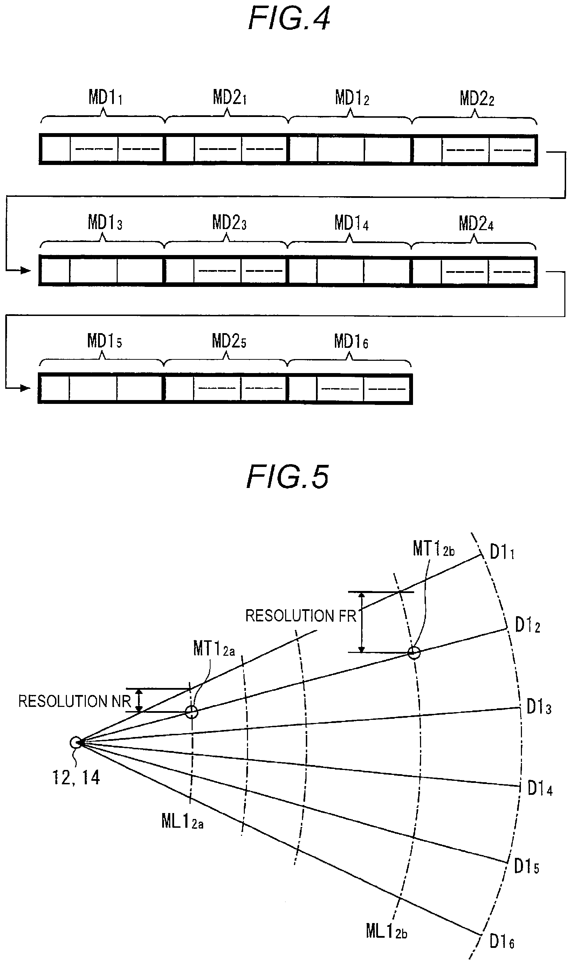

Fig. 4 is a view for explaining storage of the measurement distances $ML1_n$ in the memory unit 26 by the calculating unit 30. As illustrated in Fig. 4, the calculating unit 30 stores, in the memory unit 26, distance-measurement information $MD1_n$ including distance measurement flags F, the measurement distances $ML1_n$, and the reflection intensities $R1_n$ of the respective distance-measurement directions $D1_n$, in a one-dimensional memory array in which the distance-measurement information $MD1_n$ is associated with the order of the distance-measurement directions $D1_n$ along the scanning direction. Specifically, the calculating unit 30 stores distance-measurement information $MD1_1$, $MD1_2$, $MD1_3$, ... in the order of the distance-measurement directions $D1_1$, $D1_2$, $D1_3$, ... and in the one-dimensional memory array. Here, the calculating unit 30 stores the distance-measurement information $MD1_n$ of the respective distance-measurement directions $D1_n$ while holding memory areas for storing non-distance-measurement information $MD2_m$ of non-distance-measurement directions $D2_m$ ($m=1, 2, ...$) among the distance-measurement information $MD1_n$ of the respective distance-measurement directions $D1_n$.

In a case of distance-measurement directions $D1_n$ on which no distance-measurement target MT exists (e.g., the distance-measurement directions $D1_1$ and $D1_6$), the calculating unit 30 stores distance-measurement information $MD1_n$ including distance measurement flags F which are set to "0" to indicate that no distance-measurement target MT exists, that is, the measurement distances $ML1_n$ do not exist. Further, the calculating unit 30 may use preset values for the measurement distances $ML1_n$ and the reflection intensities $R1_n$ of the distance-measurement directions $D1_n$ on which no distance-measurement target MT exists, or may maintain previously set values for the measurement distances $ML1_n$ and the reflection intensities $R1_n$. In a case of distance-measurement directions $D1_n$ on which distance-measurement targets MT exist (e.g., the distance-measurement directions $D1_2$, $D1_3$, $D1_4$, and $D1_5$), the calculating unit 30 stores distance-measurement information $MD1_n$ including distance measurement flags F which are set to "1" to indicate that distance-measurement targets MT exist, that is, the measurement distances $ML1_n$ exist, and the calculated measurement distances $ML1_n$ and reflection intensities $R1_n$.

Fig. 5 is a view for explaining dependency of resolutions NR and FR on the measurement distances $ML1_n$. As

illustrated in Fig. 5, a comparison is performed between, on a distance-measurement direction $D1_2$, resolution NR when a measurement distance $ML1_2$ to a distance-measurement target $MT1_{2a}$ is "$ML1_{2a}$" and resolution FR when a measurement distance $ML1_2$ to a distance-measurement target $MT1_{2b}$ is "$ML1_{2b}$." Here, it is assumed that $ML1_{2a} < ML1_{2b}$. Since the plurality of distance-measurement directions $D1_n$ extend radially, the distance in the scanning direction between the distance-measurement directions $D1_1$ and $D1_3$ adjacent to the distance-measurement direction $D1_2$ becomes long as the measurement distance $ML1_2$ becomes long. Accordingly, the resolution NR which is nearer to the light emitting unit 12 and the light receiving unit 14 is higher than the resolution FR which is further from the light emitting unit 12 and the light receiving unit 14.

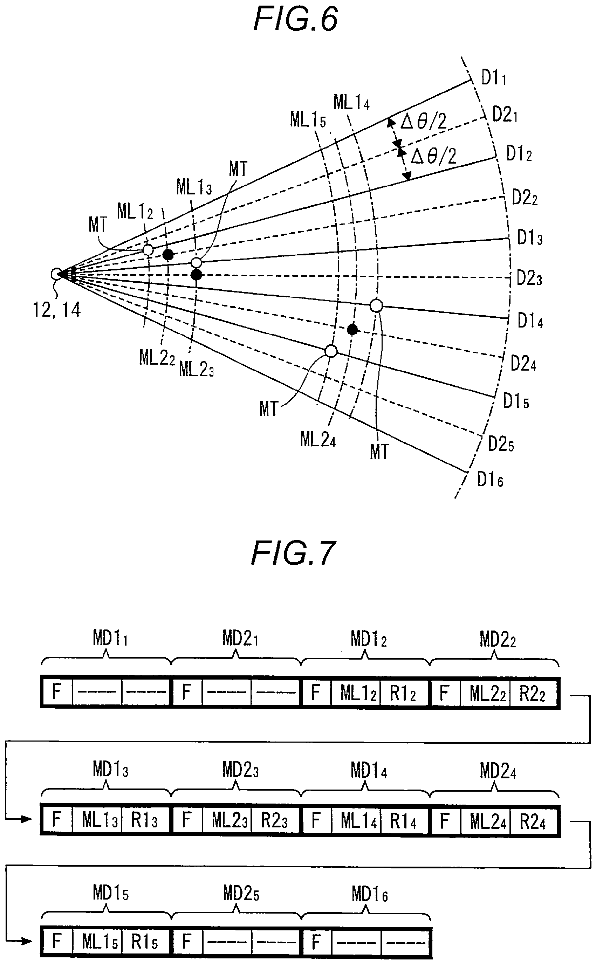

Fig. 6 is a view for explaining complementation of non-measurement distances $ML2_m$ of non-distance-measurement directions $D2_m$ by the complementing unit 32. As illustrated in Fig. 6, for example, a non-distance-measurement direction $D2_m$ is a direction that is rotated by $\Delta\theta/2$ from a distance-measurement direction $D1_m$ and reversely rotated by $\Delta\theta/2$ from a distance-measurement direction $D1_{m+1}$, around the light emitting unit 12.

When at least one of measurement distances $ML1_m$ and $ML1_{m+1}$ of adjacent distance-measurement directions $D1_m$ and $D1_{m+1}$ on either side of a non-distance-measurement direction $D2_m$ to be complemented is not measured, the complementing unit 32 does not calculate a non-measurement distance $ML2_m$ of the non-distance-measurement direction $D2_m$. The case where the measurement distances $ML1_m$ and $ML1_{m+1}$ are not measured is, for example, a case where no distance-measurement target MT exists on the distance-measurement directions $D1_m$ and $D1_{m+1}$.

When the measurement distances $ML1_m$ and $ML1_{m+1}$ of the adjacent distance-measurement directions $D1_m$ and $D1_{m+1}$ on either side of the non-distance-measurement direction $D2_m$ to be complemented are measured, the complementing unit 32 selects one of the first and second complementing processes based on a distance difference $\Delta L$ ($= |ML1_m - ML1_{m+1}|$) which is an absolute value of a difference between the measurement distances $ML1_m$ and $ML1_{m+1}$, so as to complement the distance to the position indicated by the black circle as the non-measurement distance $ML2_m$.

The complementing unit 32 determines whether the distance difference $\Delta L$ is in a first predetermined range. An example of the first range is a range less than a predetermined distance threshold Th. When it is determined that the distance difference $\Delta L$ is in the first range, the complementing unit 32 calculates the non-measurement distance $ML2_m$ of the non-distance-measurement direction $D2_m$ by the first complementing process. Specifically, the complementing unit 32 calculates an additive average value of the measurement distances $ML1_m$ and $ML1_{m+1}$ of the adjacent distance-measurement directions $D1_m$ and $D1_{m+1}$ on either side of the non-distance-measurement direction $D2_m$ to be complemented, based on the following expression (2). The complementing unit 32 sets the calculated additive average value as the non-measurement distance $ML2_m$.

$$ML2_m = (ML1_m + ML1_{m+1})/2 \ ... \ (2)$$

For example, when a distance difference $\Delta L$ between the measurement distance $ML1_2$ of the distance-measurement direction $D1_2$ and the measurement distance $ML1_3$ of the distance-measurement direction $D1_3$ is in the first range, the complementing unit 32 sets $(ML1_2 + ML1_3)/2$ as a non-measurement distance $ML2_2$ of a non-distance-measurement direction $D2_2$. The complementing unit 32 sets $(ML1_4 + ML1_5)/2$ as a non-measurement distance $ML2_4$ of a distance-measurement direction $D2_4$.

Further, in the first complementing process, when the distance difference $\Delta L$ is in the first range, the complementing unit 32 calculates an additive average value of reflection intensities $R1_m$ and $R1_{m+1}$ of the adjacent distance-measurement directions $D1_m$ and $D1_{m+1}$ on either side of the non-distance-measurement direction $D2_m$ to be complemented, as a reflection intensity $R2_m$ of the non-distance-measurement direction $D2_m$.

The complementing unit 32 determines whether the distance difference $\Delta L$ is in the second range larger than the first predetermined range. An example of the second range is a range equal to or more than the first range and equal to or more than the above-described distance threshold Th. When it is determined that the distance difference $\Delta L$ is in the second range, the complementing unit 32 calculates the non-measurement distance $ML2_m$ of the non-distance-measurement direction $D2_m$ by the second complementing process. Specifically, the complementing unit 32 calculates the non-measurement distance $ML2_m$ by the second complementing process in which, of the measurement distances $ML1_m$ and $ML1_{m+1}$ of the adjacent distance-measurement directions $D1_m$ and $D1_{m+1}$ on either side of the non-distance-measurement direction $D2_m$ to be complemented, a weight ratio of the weight of the shorter measurement distance $ML1_S$ to the weight of the longer measurement distance $ML1_L$ is set to be larger than a weight ratio in the first complementing process. For example, the complementing unit 32 sets a weighted average value represented in expression (3) in which the weight of the shorter measurement distance $ML1_S$ is "W1," and the weight of the longer measurement distance $ML1_L$ is "W2," as the non-measurement distance $ML2_m$. $W1 > W2$.

$$ML2_m = (W1 \times ML1_S + W2 \times ML1_L)/(W1 + W2) \ ... \ (3)$$

Here, a weight ratio Rt2 of the weight of the shorter measurement distance $ML1_S$ to the weight of the longer measurement distance $ML1_L$ is W1/W2 and is larger than 1. In the first complementing process adopting the additive average value, a weight ratio Rt1 of the weight of the shorter measurement distance $ML1_S$ to the weight of the longer measurement distance $ML1_L$ is "1." Thus, the weight ratio Rt2 of the second complementing process is larger than the weight ratio Rt1 of the first complementing process. In addition, the complementing unit 32 may set a weighted average value when W1=1 and W2=0, as the non-measurement distance $ML2_m$. In this case, the complementing unit 32 sets the shorter measurement distance $ML1_S$ as the non-measurement distance $ML2_m$ to be complemented.

For example, when the distance difference $\Delta L$ between the measurement distance $ML1_3$ of the distance-measurement direction $D1_3$ and the measurement distance $ML1_4$ of the distance-measurement direction $D1_4$ is in the second range, the complementing unit 32 sets $(W1 \times ML1_3 + W2 \times ML1_4)/(W1+W2)$ as a non-measurement distance $ML2_3$ of a non-distance-measurement direction $D2_3$. When W1=1 and W2=0, the complementing unit 32 sets the shorter measurement distance $ML1_3$ as the non-measurement distance $ML2_3$ of the non-distance-measurement direction $D2_3$.

Further, when it is determined that the distance difference $\Delta L$ is in the second range, the complementing unit 32 calculates a weighted average value of the reflection intensities $R1_m$ and $R1_{m+1}$ of the adjacent distance-measurement directions $D1_m$ and $D1_{m+1}$ on either side of the non-distance-measurement direction $D2_m$, as the reflection intensity $R2_m$ of the non-distance-measurement direction $D2_m$. The weighted average value of the reflection intensities is a value obtained by substituting the measurement distances $ML1_S$ and $ML1_L$ with a reflection intensity $R1_n$ of the measurement distance $ML1_S$ and a reflection intensity $R1_n$ of the measurement distance $ML1_L$, respectively, in expression (3). The complementing unit 32 may set a weighted average value when W1=1 and W2=0, as the reflection intensity $R2_m$. In this case, the complementing unit 32 sets the reflection intensity $R1_n$ of the shorter measurement distance $ML1_s$, as the reflection intensity $R2_m$ to be complemented.

Fig. 7 is a view for explaining storage of the non-measurement distances $ML2_m$ of the non-distance-measurement directions $D2_m$ in the memory unit 26 by the complementing unit 32. As illustrated in Fig. 7, the complementing unit 32 stores, in the memory unit 26, non-distance-measurement information $MD2_m$ including distance measurement flags F, the non-measurement distances $ML2_m$, and the reflection intensities $R2_m$ of the respective non-distance-measurement directions $D2_m$, in a one-dimensional memory array, in which the non-distance-measurement information $MD2_m$ is associated with the order of the non-distance-measurement directions $D2_m$ along the scanning direction.

Specifically, the complementing unit 32 stores non-distance-measurement information $MD2_1$, $MD2_2$, $MD2_3$, ... of non-distance-measurement directions $D2_1$, $D2_2$, and $D2_3$, ... in the order of the non-distance-measurement directions $D2_1$, $D2_2$, $D2_3$, ... and in the one-dimensional memory array. Here, the complementing unit 32 stores non-distance-measurement information $MD2_m$ of a non-distance-measurement direction $D2_m$ in a memory area between a memory area of distance-measurement information $MD1_m$ of a distance-measurement direction $D1_m$ and a memory area of distance-measurement information $MD1_{m+1}$ of a distance-measurement direction $D1_{m+1}$. Accordingly, the calculating unit 30 and the complementing unit 32 arrange and store the distance-measurement information $MD1_n$ of the distance-measurement directions $D1_n$ and the non-distance-measurement information $MD2_m$ of the non-distance-measurement directions $D2_m$ in an alternate manner in the memory unit 26. That is, the calculating unit 30 and the complementing unit 32 arrange and store the distance-measurement information $MD1_n$ and the non-distance-measurement information $MD2_m$ in the one-dimensional manner in the order following the scanning direction in the memory unit 26.

In the case of the non-distance-measurement directions $D2_m$ on which any non-measurement distances $ML2_m$ do not exist (e.g., the non-distance-measurement directions $D2_1$ and $D2_5$), the complementing unit 32 stores non-distance-measurement information $MD2_m$ including distance measurement flags F which are set to "0" to indicate that any non-measurement distances $ML2_m$ do not exist. In addition, the complementing unit 32 may use preset values for the non-measurement distances $ML2_m$ and the reflection intensities $R2_m$ of the non-distance-measurement directions $D2_m$ of which the non-measurement distances $ML2_m$ have not been calculated, or may maintain previously calculated values for the non-measurement distances $ML2_m$ and the reflection intensities $R2_m$. In the case of the non-distance-measurement directions $D2_m$ of which the non-measurement distances $ML2_m$ have been calculated (e.g., the non-distance-measurement directions $D2_2$, $D2_3$, and $D2_4$), the complementing unit 32 stores non-distance-measurement information $MD2_m$ including distance measurement flags F which are set to "1" to indicate that the non-measurement distances $ML2_m$ exist, and the calculated non-measurement distances $ML2_m$ and reflection intensities $R2_m$.

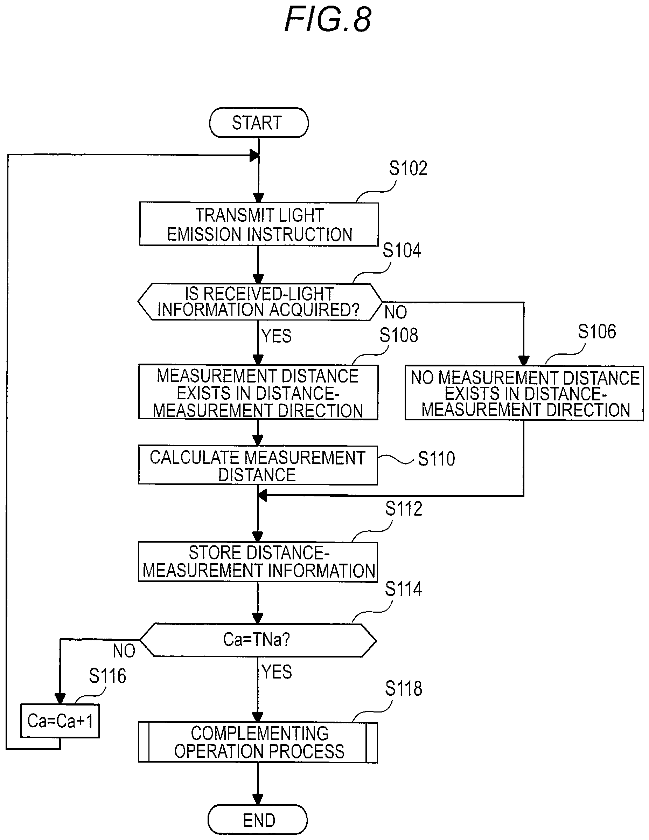

Fig. 8 is a flowchart of the distance measuring process executed by the controller 24. The controller 24 executes the distance measuring process by reading the distance measurement programs.

As illustrated in Fig. 8, in the distance measuring process, the calculating unit 30 transmits a scanning instruction to the scanning member 22 and transmits a light emission instruction to the light emitting member 20 (S102). The calculating unit 30 determines whether received-light information has been acquired from the light receiving unit 14 (S104). When it is determined that received-light information has not been acquired from the light receiving unit 14 (S104: No), the calculating unit 30 generates distance-measurement information $MD1_n$ in which "0" is set for a distance measurement flag F to indicate that no measurement distance $ML1_n$ exists in the current distance-measurement direction $D1_n$ (S106), and stores the information in the one-dimensional memory array in the memory unit 26 (S112).

When it is determined that received-light information has been acquired from the light receiving unit 14 (S104: Yes), the calculating unit 30 sets "1" for a distance measurement flag F to indicate that a measurement distance $ML1_n$ exists in the current distance-measurement direction $D1_n$ (S108). The calculating unit 30 calculates a reflection intensity $R1_n$ from the magnitude of the received-light information, and further calculates the measurement distance $ML1_n$ from a time difference between the light emission timing t1 and the light reception timing t2 (S110). The calculating unit 30 stores the distance-measurement information $MD1_n$ including the distance measurement flag F, the measurement distance $ML1_n$, and the reflection intensity $R1_n$ in the one-dimensional memory array in the memory unit 26 (S112).

The calculating unit 30 determines whether the counted number Ca which is the number of the distance-measurement directions $D1_n$ that have been subject to the distance measurement has reached the total number TNa of the distance-measurement directions $D1_n$ (S 114). In other words, the calculating unit 30 determines whether all the distance-measurement directions $D1_n$ have been subject to the distance measurement. When it is determined that all the distance-measurement directions $D1_n$ have not been subject to the distance measurement, the calculating unit 30 determines that the counted number Ca has not reached the total number TNa (S114: No), and increments the counted number Ca by 1 (S116) to thereafter repeat the processes after step S102. Meanwhile, when it is determined that all the distance-measurement directions $D1_n$ have been subject to the distance measurement, the calculating unit 30 determines that the counted number Ca has reached the total number TNa (S114: Yes). Then, the complementing unit 30 executes the complementing operation process to be described later (S118) and finishes the distance measuring process.

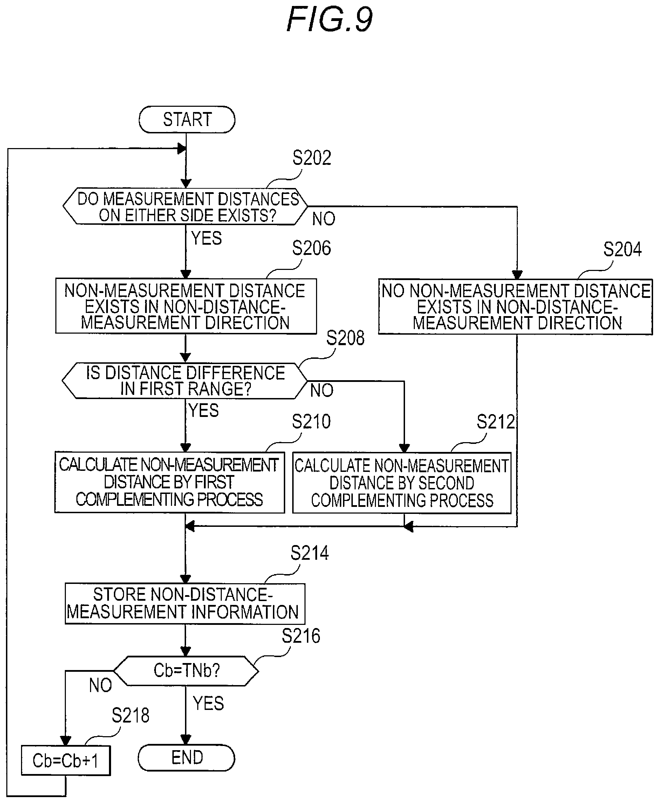

Fig. 9 is a flowchart of the complementing operation process executed by the complementing unit 32 of the controller 24.

As illustrated in Fig. 9, in the complementing operation process, the complementing unit 32 determines whether there exist measurement distances $ML1_m$ and $ML1_{m+1}$ of adjacent distance-measurement directions $D1_m$ and $D1_{m+1}$ on either side of a non-distance-measurement direction $D2_m$ to be complemented (S202). For example, the complementing unit 32 determines whether there exist the measurement distance $ML1_m$ and $ML1_{m+1}$, by distance measurement flags F of the adjacent distance-measurement directions $D1_m$ and $D1_{m+1}$.

When it is determined that at least one of the measurement distances $ML1_m$ and $ML1_{m+1}$ of the adjacent distance-measurement directions $D1_m$ and $D1_{m+1}$ does not exist (S 202: No), the complementing unit 32 generates non-distance-measurement information $MD2_m$ in which "0" is set for a distance measurement flag F to indicate that no non-measurement distance $ML2_m$ exists in the current non-measurement direction $D2_m$ (S204). The complementing unit 32 stores the non-distance-measurement information $MD2_m$ in the one-dimensional memory array between the memory areas of the memory unit 26 in which the distance-measurement information $MD1_m$ and $MD1_{m+1}$ is stored (S214).

When it is determined that both the measurement distances $ML1_m$ and $ML1_{m+1}$ of the adjacent distance-measurement directions $D1_m$ and $D1_{m+1}$ exist (S202: Yes), the complementing unit 32 sets "1" for a distance measurement flag F to indicate that the non-measurement distance $ML2_m$ exists in the current non-distance-measurement direction $D2_m$ (S206). The complementing unit 32 determines whether a distance difference $\Delta L$ between the measurement distances $ML1_m$ and $ML1_{m+1}$ of the adjacent distance-measurement directions $D1_m$ and $D1_{m+1}$ is in the first range (S208).

When it is determined that the distance difference $\Delta L$ is in the first range (S208: Yes), the complementing unit 32 calculates the non-measurement distance $ML2_m$ by the first complementing process (S210). Further, the complementing unit 32 calculates a reflection intensity $R2_m$ by the first complementing process.

When it is determined that the distance difference $\Delta L$ is not in the first range, that is, when it is determined that the distance difference $\Delta L$ is in the second range (S208: No), the complementing unit 32 calculates the non-measurement distance $ML2_m$ by the second complementing process (S212). Further, the complementing unit 32 calculates a reflection intensity $R2_m$ by the second complementing process.

After calculating the non-measurement distance $ML2_m$ and the reflection intensity $R2_m$, the complementing unit 32 stores non-distance-measurement information $MD2_m$ including the distance measurement flag F, the non-measurement distance $ML2_m$, and the reflection intensity $R2_m$ in the one-dimensional memory array between the memory areas of the memory unit 26 in which the distance-measurement information $MD1_m$ and $MD1_{m+1}$ is stored (S214).

The complementing unit 32 determines whether the counted number Cb which is the number of complemented non-distance-measurement directions $D2_m$ has reached the total number TNb of non-distance-measurement directions $D2_m$ to be complemented (S216). In other words, the complementing unit 32 determines whether all the non-distance-measurement directions $D2_m$ have been complemented. Here, TNb=TNa-1. When it is determined that all the non-distance-measurement directions $D2_m$ have not been complemented, the complementing unit 32 determines that the counted number Cb has not reached the total number TNb (S 216: No), and increments the counted number Cb by 1 (S218) to thereafter repeat the processes after step S202. Meanwhile, when it is determined that all the non-distance-measurement directions $D2_m$ have been complemented, the complementing unit 32 determines that the counted number Cb has reached the total number TNb (S216: Yes) and finishes the complementing operation process.

As described above, in the distance-measurement device 10, the non-measurement distance $ML2_m$ of the non-distance-measurement direction $D2_m$ is calculated and complemented based on the measurement distances $ML1_m$ and

$ML1_{m+1}$ of the adjacent distance-measurement directions $D1_m$ and $D1_{m+1}$ on either side of the non-distance-measurement direction $D2_m$. As a result, the distance-measurement device 10 may improve the resolution in the scanning direction with the configuration that may be easily mounted without increasing calculation costs. For example, when the measurement distances $ML1_m$ exist in all the distance-measurement directions $D1_m$, the distance-measurement device 10 may improve the resolution to be substantially double.

In the distance-measurement device 10, the non-measurement distance $ML2_m$ is complemented by one of the first and second complementing processes that is determined based on the distance difference $\Delta L$ between the measurement distances $ML1_m$ and $ML1_{m+1}$ of the adjacent distance-measurement directions $D1_m$ and $D1_{m+1}$ on either side of the non-distance-measurement direction $D2_m$. As a result, the distance-measurement device 10 may appropriately complement the non-measurement distance $ML2_m$ based on the distance difference $\Delta L$. Specifically, when the distance difference $\Delta L$ is small, that is, the resolutions of the measurement distances $ML1_m$ and $ML1_{m+1}$ of the adjacent distance-measurement directions $D1_m$ and $D1_{m+1}$ are substantially the same, and the accuracies of the measurement distances $ML1_m$ and $ML1_{m+1}$ are substantially the same, the distance-measurement device 10 selects the first complementing process. As a result, the distance-measurement device 10 may complement the non-measurement distance $ML2_m$ with high accuracy using the additive average value of the measurement distances $ML1_m$ and $ML1_{m+1}$ as the non-measurement distance $ML2_m$. When the distance difference $\Delta L$ is large, that is, the resolutions of the measurement distances $ML1_m$ and $ML1_{m+1}$ of the adjacent distance-measurement directions $D1_m$ and $D1_{m+1}$ are largely different from each other, and the difference in accuracy between the measurement distances $ML1_m$ and $ML1_{m+1}$ is large, the distance-measurement device 10 selects the second complementing process. As a result, the distance-measurement device 10 may complement the non-measurement distance $ML2_m$ with high accuracy by making the weight ratio $Rt2$ larger than the weight ratio $Rt1$ in the first complementing process.

In the distance-measurement device 10, since the light emitting unit 12 outputs the distance-measurement light L in the plurality of distance-measurement directions $D1_n$ arranged in the radial manner, the distance-measurement device 10 may cause the distance-measurement light L to scan by the rotation driving of the light emitting unit 12 without substantially moving the light emitting unit 12. As a result, since the movement range of the light emitting unit 12 may be reduced, the downsizing of the distance-measurement device 10 may be implemented.

<Second Embodiment not forming part of the invention>

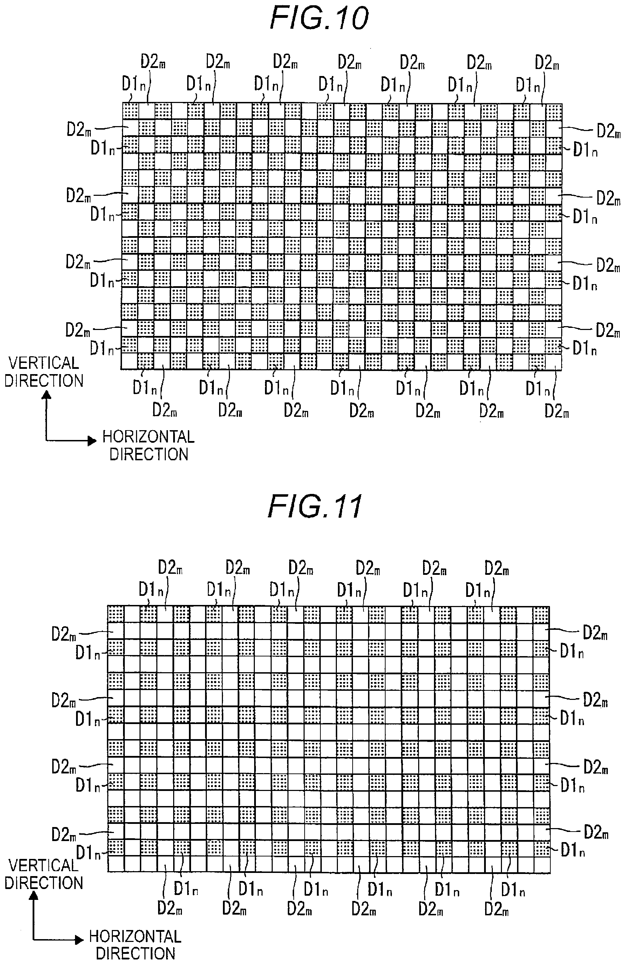

Fig. 10 is a view for explaining a scanning range of the distance-measurement device 10 of a second embodiment not forming part of the invention. Fig. 11 is a view for explaining another scanning range of the distance-measurement device 10 of the second embodiment. Figs. 10 and 11 illustrate a plane which crosses (e.g., is orthogonal to) the traveling direction of the distance-measurement light L output by the light emitting unit 12. It is assumed that the directions indicated by the arrows in Figs. 10 and 11 are the horizontal and vertical directions. Further, it is assumed that the direction orthogonal to the plane of the drawing sheet is substantially parallel with the traveling direction of the distance-measurement light L. In Figs. 10 and 11, the dot hatched areas indicate the areas on the distance-measurement directions $D1_n$, and the non-hatched areas indicate the areas on the non-distance-measurement directions $D2_m$. In the examples illustrated in Figs. 10 and 11, the distance-measurement light L scans in the vertical and horizontal directions.

In the example illustrated in Fig. 10, in the distance-measurement device 10, the light emitting unit 12 causes the distance-measurement light L to scan such that areas vertically adjacent to a distance-measurement direction $D1_n$ and areas horizontally adjacent to the distance-measurement direction $D1_n$ become non-distance-measurement directions $D2_m$. In this case, the complementing unit 32 complements a non-measurement distance $ML2_m$ of a non-distance-measurement direction $D2_m$ based on four distance-measurement directions $D1_n$ vertically and horizontally adjacent to the non-distance-measurement direction $D2_m$. For example, when at least two measurement distances $ML1_n$ exist in the four distance-measurement directions $D1_n$, the complementing unit 32 complements the non-measurement distance $ML2_m$.

In this case, the complementing unit 32 calculates a distance difference $\Delta L$ which is a difference between a maximum measurement distance $ML1_n$ and a minimum measurement distance $ML1_n$, from the two or more existing measurement distances $ML1_n$. When the distance difference $\Delta L$ is in the first range, the complementing unit 32 calculates the non-measurement distance $ML2_m$ by the first complementing process. In the first complementing process of the second embodiment, the complementing unit 32 may set an additive average value of the maximum measurement distance $ML1_n$ and the minimum measurement distance $ML1_n$ as the non-measurement distance $ML2_m$, or may set an additive average value of all measurement distances $ML1_n$ existing in the adjacent distance-measurement directions $D1_n$ as the non-measurement distance $ML2_m$.

When the distance difference $\Delta L$ is in the second range, the complementing unit 32 calculates the non-measurement distance $ML2_m$ by the second complementing process. In the second complementing process of the second embodiment, the complementing unit 32 may set a weighted average value of the maximum measurement distance $ML1_n$ and the minimum measurement distance $ML1_n$ as the non-measurement distance $ML2_m$, or may set a weighted average value of all measurement distances $ML1_n$ of the adjacent distance-measurement directions $D1_n$ as the non-measurement distance $ML2_m$.

In the example illustrated in Fig. 11, in the distance-measurement device 10, the light emitting unit 12 causes the distance-measurement light L to scan such that all the areas adjacent to a distance-measurement direction $D1_n$ in the eight directions become non-distance-measurement directions $D2_m$. In this case, the complementing unit 32 complements a non-measurement distance $ML2_m$ of a non-distance-measurement direction $D2_m$ based on four distance-measurement directions $D1_n$ obliquely adjacent to the non-distance-measurement direction $D2_m$. In the example illustrated in Fig. 11, the specific complementing process by the complementing unit 32 is similar to the complementing process in Fig. 10.

In the above-described embodiment, the function, the connection relationship, the number, the arrangement, and others of each component may be appropriately modified. Further, the process sequence in the distance measuring process and the complementing operation process may be appropriately modified.

In the above-described embodiment, the complementing unit 32 selects a complementing process from the plurality of complementing processes, by a comparison between the predetermined distance threshold Th and the distance difference $\Delta L$. For example, the complementing unit 32 may determine a complementing process according to the shorter measurement distance $ML1_s$ of the measurement distances $ML1_m$ and $ML1_{m+1}$ of the adjacent distance-measurement directions $D1_m$, and $D1_{m+1}$ on either side of the non-distance-measurement direction $D2_m$, and the distance difference $\Delta L$. Specifically, the complementing unit 32 may select a complementing process by comparing a distance threshold Th calculated based on the shorter measurement distance $ML1_S$ and the distance difference $\Delta L$ with each other. For example, the complementing unit 32 calculates the distance threshold Th based on the following equation (4).

$$Th = K1/D^{K2} + K3 \ ... \ (4)$$

The constants K1, K2, and K3 are predetermined fixed values. The distance D is the shorter measurement distance $ML1_s$. The distance threshold Th becomes small as the distance D increases. Accordingly, the distance threshold Th becomes small as the resolution in the scanning direction is deteriorated. When the constant K2 is "0," the distance threshold Th becomes a constant so that the same configuration as that in the first embodiment of the invention is obtained. The complementing unit 32 selects the first complementing process when the distance difference $\Delta L$ is in the first range defined to be less than the distance threshold Th, and selects the second complementing process when the distance difference $\Delta L$ is in the second range defined to be equal to or more than the distance threshold Th, so as to complement the non-measurement distance $ML2_m$. Therefore, the complementing unit 32 may select a more appropriate complementing process according to the comparison between the distance threshold Th calculated from the shorter measurement distance $ML1_s$ and the distance difference $\Delta L$, so as to complement the non-measurement distance $ML2_m$ with high accuracy.

In the above-described embodiments, the example where the complementing unit 32 uses the first and second complementing processes in which a ratio of weights is preset has been described. For example, the complementing unit 32 may complement the non-measurement distance $ML2_m$ based on a complementing process using a ratio of measurement distances $ML1_n$ of a plurality of distance-measurement directions $D1_n$ corresponding to the shorter measurement distance $ML1_S$ between the measurement distances $ML1_m$ and $ML1_{m+1}$ of the adjacent distance-measurement directions $D1_m$ and $D1_{m+1}$ on either side of the non-distance-measurement direction $D2_m$, and the distance difference $\Delta L$. The ratio referred to here indicates a ratio of the shorter measurement distance $ML1_S$ to the longer measurement distance $ML1_L$ between the measurement distances $ML1_m$ and $ML1_{m+1}$ of the adjacent distance-measurement directions $D1_m$ and $D1_{m+1}$ on either side of the non-distance-measurement direction $D2_m$. For example, the ratio indicates a ratio of weights in a weighted average value. This ratio may be stored, in the memory unit 26, as a table in which the ratio is associated with the shorter measurement distance $ML1_S$ and the distance difference $\Delta L$. Alternatively, the ratio may be stored as an equation including the shorter measurement distance $ML1_s$ and the distance difference $\Delta L$ in the memory unit 26. Thus, the complementing unit 32 may more appropriately complement the non-measurement distance $ML2_m$ by flexibly coping with the shorter measurement distance $ML1_S$ and the distance difference $\Delta L$.

In the above-described embodiments, the example where the complementing unit 32 selects one of the first and second complementing processes has been described. The complementing unit 32 may complement the non-measurement distance $ML2_m$ based on one selected from three or more complementing processes according to the distance difference $\Delta L$.

In the above-described embodiments, the example where the complementing unit 32 complements the non-measurement distance $ML2_m$ using the adjacent measurement distances $ML1_n$ has been described. However, the complementing unit 32 may complement the non-measurement distance $ML2_m$ using measurement distances $ML1_n$ which are far apart from the non-measurement distance $ML2_m$ in the scanning direction, in addition to the adjacent measurement distances $ML1_n$. In this case, it is preferable that the weights of the measurement distances $ML1_n$ are

made small as the distance in the scanning direction from the non-distance-measurement direction $D2_m$ to be complemented becomes long.

In the above-described embodiment, the example where the calculating unit 30 measures the distances of all the distance-measurement directions $D1_n$, and then, the complementing unit 32 executes the complementing operation process has been described. However, the calculation of the measurement distance $ML1_n$ by the calculating unit 30 and the complementation of the non-measurement distance $ML2_m$ by the complementing unit 32 may be alternately executed.

In the above-described embodiments may be combined with each other. For example, the processes in each of the embodiments may be configured to be switched by an instruction of a user.

**Claims**

1.  A distance-measurement device (10) comprising:

    a light emitting unit (12) configured to emit distance-measurement light (L) in a plurality of distance-measurement directions ($D1_n$, $D1_m$);
    a light receiving unit (14) configured to transmit received-light information upon receiving the distance-measurement light (L) reflected by a distance-measurement target (MT);
    a calculating unit (30) configured to transmit a light emission instruction to the light emitting unit (12) and to receive the received-light information from the light receiving unit (14) to calculate a measurement distance ($ML1_m$, $ML1_n$) which is a distance to the distance-measurement target (MT) based on a time difference between the light emission and the light reception; and
    a complementing unit (32) configured to complement a non-measurement distance ($ML2_m$) of a non-distance-measurement direction ($D2_m$) among the plurality of distance-measurement directions ($D1_m$, $D1_n$) using measurement distances of adjacent distance-measurement directions ($D1_m$, $D1_n$) on either side of the non-distance-measurement direction (D2m)
    wherein the complementing unit (32) is configured to complement the non-measurement distance ($ML2_m$) based on a complementing process that is determined according to a distance difference ($\Delta L$) which is a difference between the measurement distances ($ML1_m$, $ML1_n$) of the adjacent distance-measurement directions ($D1_m$, $D1_n$) on either side of the non-distance-measurement direction ($D2_m$),
    **characterised in that** when the distance difference ($\Delta L$) is in a first preset range, the complementing unit (32) is configured to calculate the non-measurement distance ($ML2_m$) by a first complementing process,
    wherein when the distance difference ($\Delta L$) is in a second range larger than the first range, the complementing unit (32) is configured to calculate the non-measurement distance ($ML2_m$) by a second complementing process, and
    wherein, in the second complementing process, the weight ratio (Rt2) of the weight (W1) of the shorter measurement distance ($ML1_S$) to the weight (W2) of the longer measurement distance ($ML1_L$) between the measurement distances ($ML1_m$, $ML1_n$) of the adjacent distance-measurement directions ($D1_m$, $D1_n$) on either side of the non-distance-measurement direction ($D2_m$) is larger than the weight ratio (Rt1) of the weight of the shorter measurement distance ($ML1_S$) to the weight of the longer measurement distance ($ML1_L$) in the first complementing process.

2.  The distance-measurement device according to claim 1,
    wherein the complementing unit (32) is configured to determine the complementing process according to a shorter measurement distance between the measurement distances ($ML1_m$, $ML1_n$) of the adjacent distance-measurement directions ($D1_m$, $D1_n$) on either side of the non-distance-measurement direction ($D2_m$), and the distance difference.

3.  The distance-measurement device according to claim 1 or 2,
    wherein the light emitting unit (12) is configured to emit the distance-measurement light (L) in the plurality of distance-measurement directions ($D1_m$, $D1_n$) arranged in a radial manner.

**Patentansprüche**

1.  Distanzmessvorrichtung (10), umfassend:

    eine Lichtemissionseinheit (12), die dazu ausgestaltet ist, ein Distanzmesslicht (L) in mehrere Distanzmessrichtungen ($D1_n$, $D1_m$) zu emittieren,

eine Lichtempfangseinheit (14), die dazu ausgestaltet ist, Informationen zum empfangenen Licht beim Empfangen des Distanzmesslichts (L), das von einem Distanzmessziel (MT) reflektiert wird, zu senden,

eine Berechnungseinheit (30), die dazu ausgestaltet ist, eine Lichtemissionsanweisung an die Lichtemissionseinheit (12) zu senden und die Informationen zum empfangenen Licht von der Lichtempfangseinheit (14) zu empfangen, um eine Messdistanz ($ML1_m$, $ML1_n$), die eine Distanz zu dem Distanzmessziel (MT) ist, basierend auf einer Zeitdifferenz zwischen der Lichtemission und dem Lichtempfang zu berechnen, und

eine Komplementierungseinheit (32), die dazu ausgestaltet ist, eine Nicht-Messdistanz ($ML2_m$) einer Nicht-Distanzmessrichtung ($D2_m$) aus den mehreren Distanzmessrichtungen ($D1_m$, $D1_n$) unter Verwendung von Messdistanzen benachbarter Distanzmessrichtungen ($D1_m$, $D1_n$) auf beiden Seiten der Nicht-Distanzmessrichtung ($D2_m$) zu komplementieren,

wobei die Komplementierungseinheit (32) dazu ausgestaltet ist, die Nicht-Messdistanz ($ML2_m$) basierend auf einem Komplementierungsprozess zu komplementieren, der gemäß einer Distanzdifferenz ($\Delta L$) bestimmt wird, die eine Differenz zwischen den Messdistanzen ($ML1_m$, $ML1_n$) der benachbarten Distanzmessrichtungen ($D1_m$, $D1_n$) auf beiden Seiten der Nicht-Distanzmessrichtung ($D2_m$) ist,

**dadurch gekennzeichnet, dass**, wenn die Distanzdifferenz ($\Delta L$) in einem ersten voreingestellten Bereich liegt, die Komplementierungseinheit (32) dazu ausgestaltet ist, die Nicht-Messdistanz ($ML2_m$) durch einen ersten Komplementierungsprozess zu berechnen,

wobei, wenn die Distanzdifferenz ($\Delta L$) in einem zweiten Bereich liegt, der größer als der erste Bereich ist, die Komplementierungseinheit (32) dazu ausgestaltet ist, die Nicht-Messdistanz ($ML2_m$) durch einen zweiten Komplementierungsprozess zu berechnen, und

wobei in dem zweiten Komplementierungsprozess das Gewichtsverhältnis (Rt2) des Gewichts (W1) der kürzeren Messdistanz ($ML1_S$) zu dem Gewicht (W2) der längeren Messdistanz ($ML1_L$) zwischen den Messdistanzen ($ML1_m$, $ML1_n$) der benachbarten Distanzmessrichtungen ($D1_m$, $D1_n$) auf beiden Seiten der Nicht-Distanzmessrichtung ($D2_m$) größer als das Gewichtsverhältnis (Rt1) des Gewichts der kürzeren Messdistanz ($ML1_S$) zu dem Gewicht der längeren Messdistanz ($ML1_L$) in dem ersten Komplementierungsprozess ist.

2. Distanzmessvorrichtung nach Anspruch 1,
   wobei die Komplementierungseinheit (32) dazu ausgestaltet ist, den Komplementierungsprozess gemäß einer kürzeren Messdistanz zwischen den Messdistanzen ($ML1_m$, $ML1_n$) der benachbarten Distanzmessrichtungen ($D1_m$, $D1_n$) auf beiden Seiten der Nicht-Distanzmessrichtung ($D2_m$) und der Distanzdifferenz zu bestimmen.

3. Distanzmessvorrichtung nach Anspruch 1 oder 2,
   wobei die Lichtemissionseinheit (12) dazu ausgestaltet ist, das Distanzmesslicht (L) in die mehreren Distanzmessrichtungen ($D1_m$, $D1_n$), die radial angeordnet sind, zu emittieren.

**Revendications**

1. Dispositif de mesure de distance (10) comprenant :

   une unité d'émission de lumière (12) configurée pour émettre une lumière de mesure de distance (L) dans une pluralité de directions de mesure de distance ($D1_n$, $D1_m$) ;
   une unité de réception de lumière (14) configurée pour transmettre des informations de lumière reçue lors de la réception de la lumière de mesure de distance (L) réfléchie par une cible de mesure de distance (MT) ;
   une unité de calcul (30) configurée pour transmettre une instruction d'émission de lumière à l'unité d'émission de lumière (12) et pour recevoir les informations de lumière reçue à partir de l'unité de réception de lumière (14) pour calculer une distance de mesure ($ML1_m$, $ML1_n$), qui est une distance par rapport à la cible de mesure de distance (MT), sur la base d'une différence de temps entre l'émission de lumière et la réception de lumière ; et
   une unité de complémentation (32) configurée pour compléter une distance de non-mesure ($ML2_m$) d'une direction de non mesure de distance ($D2_m$) parmi la pluralité de directions de mesure de distance ($D1_m$, $D1_n$) en utilisant des distances de mesure de directions de mesure de distance ($D1_m$, $D1_n$) adjacentes de chaque côté de la direction de non mesure de distance ($D2_m$),
   dans lequel l'unité de complémentation (32) est configurée pour compléter la distance de non-mesure ($ML2_m$) sur la base d'un processus de complémentation qui est déterminé selon une différence de distance ($\Delta L$) qui est une différence entre les distances de mesure ($ML1_m$, $ML1_n$) des directions de mesure de distance ($D1_m$, $D1_n$) adjacentes de chaque côté de la direction de non mesure de distance ($D2_m$),
   **caractérisé en ce que**, lorsque la différence de distance ($\Delta L$) est dans une première plage prédéfinie, l'unité de complémentation (32) est configurée pour calculer la distance de non-mesure ($ML2_m$) par un premier pro-

cessus de complémentation,

dans lequel, lorsque la différence de distance ($\Delta$L) est dans une deuxième plage plus grande que la première plage, l'unité de complémentation (32) est configurée pour calculer la distance de non-mesure ($ML2_m$) par un deuxième processus de complémentation, et

dans lequel, dans le deuxième processus de complémentation, le rapport pondéral (Rt2) du poids (W1) de la distance de mesure plus courte ($ML1_S$) sur le poids (W2) de la distance de mesure plus longue ($ML1_L$) entre les distances de mesure ($ML1_m$, $ML1_n$) des directions de mesure de distance ($D1_m$, $D1_n$) adjacentes de chaque côté de la direction de non mesure de distance ($D2_m$) est plus grand que le rapport pondéral (Rt1) du poids de la distance de mesure plus courte ($ML1_S$) sur le poids de la distance de mesure plus longue ($ML1_L$) dans le premier processus de complémentation.

2. Dispositif de mesure de distance selon la revendication 1, dans lequel l'unité de complémentation (32) est configurée pour déterminer le processus de complémentation selon une distance de mesure plus courte entre les distances de mesure ($ML1_m$, $ML1_n$) des directions de mesure de distance ($D1_m$, $D1_n$) adjacentes de chaque côté de la direction de non mesure de distance ($D2_m$), et la différence de distance.

3. Dispositif de mesure de distance selon la revendication 1 ou 2,
dans lequel l'unité d'émission de lumière (12) est configurée pour émettre la lumière de mesure de distance (L) dans la pluralité de directions de mesure de distance ($D1_m$, $D1_n$) agencées d'une manière radiale.

# FIG.1

DISTANCE-MEASUREMENT DEVICE

10

16 — DISTANCE-MEASUREMENT UNIT

26 — MEMORY UNIT

24 — CONTROLLER
30 — CALCULATING UNIT
32 — COMPLEMENTING UNIT

12 — LIGHT EMITTING UNIT
20 — LIGHT EMITTING MEMBER
22 — SCANNING MEMBER

14 — LIGHT RECEIVING UNIT

MT

L

## FIG.2

MEASUREMENT DISTANCE ML

MT

12, 20

DISTANCE-MEASUREMENT LIGHT L
(PRIOR TO REFLECTION)

TIMING

14

DISTANCE-MEASUREMENT LIGHT L
(AFTER REFLECTION)

t1   t2

EP 3 255 457 B1

# FIG.3

## FIG.4

$MD1_1$  $MD2_1$  $MD1_2$  $MD2_2$

$MD1_3$  $MD2_3$  $MD1_4$  $MD2_4$

$MD1_5$  $MD2_5$  $MD1_6$

## FIG.5

$MT1_{2b}$  $D1_1$

RESOLUTION FR

$D1_2$

$MT1_{2a}$

RESOLUTION NR

$D1_3$

12, 14

$D1_4$

$ML1_{2a}$

$D1_5$

$ML1_{2b}$  $D1_6$

## FIG.6

## FIG.7

# FIG.8

START

S102
TRANSMIT LIGHT
EMISSION INSTRUCTION

S104
IS RECEIVED-LIGHT
INFORMATION ACQUIRED?
NO

YES

S108
MEASUREMENT DISTANCE
EXISTS IN DISTANCE-
MEASUREMENT DIRECTION

S106
NO MEASUREMENT DISTANCE
EXISTS IN DISTANCE-
MEASUREMENT DIRECTION

S110
CALCULATE MEASUREMENT
DISTANCE

S112
STORE DISTANCE-
MEASUREMENT INFORMATION

S114
Ca=TNa?

NO

S116
Ca=Ca+1

YES

S118
COMPLEMENTING
OPERATION PROCESS

END

## FIG.9

START

S202
DO MEASUREMENT DISTANCES ON EITHER SIDE EXISTS? → NO

YES

S206
NON-MEASUREMENT DISTANCE EXISTS IN NON-DISTANCE-MEASUREMENT DIRECTION

S204
NO NON-MEASUREMENT DISTANCE EXISTS IN NON-DISTANCE-MEASUREMENT DIRECTION

S208
IS DISTANCE DIFFERENCE IN FIRST RANGE? → NO

YES

S210
CALCULATE NON-MEASUREMENT DISTANCE BY FIRST COMPLEMENTING PROCESS

S212
CALCULATE NON-MEASUREMENT DISTANCE BY SECOND COMPLEMENTING PROCESS

S214
STORE NON-DISTANCE-MEASUREMENT INFORMATION

S216
Cb=TNb?

NO

YES

S218
Cb=Cb+1

END

## FIG.10

## FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013210315 A

- US 20150346326 A